# EUROPEAN PATENT APPLICATION

(11) **EP 4 717 489 A1**
(43) Date of publication of application: **01.04.2026**
(21) Application number: 25203402.0
(22) Date of filing: 19.09.2025
(51) Int. Cl.: B60K 13/02, B60K 13/04, F01N 3/02, F01N 13/14, F01N 5/02, F02G 5/04, F02M 31/08, F02M 31/093, F01N 1/00

(54) **EXHAUST HEAT EXCHANGER TO PRE-HEAT INTAKE AIR FOR INTERNAL COMBUSTION ENGINES**

(30) Priority: 27.09.2024 US 202463700366 P
(71) Applicant: Carrier Corporation, Palm Beach Gardens, FL 33418 (US)
(72) Inventor: CONWAY, Richard, Athens, 30601 (US)
(74) Representative: Dehns

(57) **Abstract**

A heating system (30) of a cargo compartment (16) includes an internal combustion engine (34), and an exhaust pathway (44) operably connected to the internal combustion engine (34) and structured to direct exhaust gas of the internal combustion engine (34) away from the internal combustion engine (34). An air intake pathway (54) is operably connected to the internal combustion engine (34) and is structured to direct an intake airflow into the internal combustion engine (34). The air intake pathway is at least partially surrounding the exhaust pathway (44) along at least a portion of a length of the air intake pathway (54) thereby heating the intake airflow via thermal energy exchange with the exhaust gas while also preventing mixing of the intake air and the exhaust gas streams.

## Description

### BACKGROUND

Exemplary embodiments pertain to the art of cargo transportation systems, and in particular to cargo transportation systems that provide heating to a cargo container to prevent the cargo therein from freezing.

Cargo containers, such as trailers or the like, are often temperature controlled to maintain the interior of the cargo within a desired temperature range. Such temperature control is often provided by a refrigeration system acting to cool the cargo. In cold climates, however, there is a need for systems that heat the cargo container to maintain the cargo above a certain temperature to prevent damage to the cargo due to the cold climate. These heating systems typically utilize waste heat energy from operation of an internal combustion engine to heat the cargo. Fuel efficiency and heating capacity are key performance indicators of such units.

### BRIEF DESCRIPTION

According to a first aspect of the invention, there is provided a heating system of a cargo compartment including an internal combustion engine, and an exhaust pathway operably connected to the internal combustion engine and structured to direct exhaust gas of the internal combustion engine away from the internal combustion engine. An air intake pathway is operably connected to the internal combustion engine and is structured to direct an intake airflow into the internal combustion engine. The air intake pathway is at least partially surrounding the exhaust pathway along at least a portion of a length of the air intake pathway thereby heating the intake airflow via thermal energy exchange with the exhaust gas while also preventing mixing of the intake air and the exhaust gas streams.

Optionally, the air intake pathway includes an intake sleeve at least partially surrounding the exhaust pathway.

Optionally, the air intake pathway at least partially surrounds a muffler of the exhaust pathway.

Optionally, an exhaust opening of the exhaust gas pathway is offset and spaced apart from an intake opening of the air intake pathway.

Optionally, the internal combustion engine is positioned in a housing, and the exhaust pathway extends through an exhaust opening in the housing, and the air intake pathway surrounds the exhaust pathway at the exhaust opening.

Optionally, a seal is positioned at the exhaust opening.

Optionally, a heat exchanger is operably connected to the internal combustion engine, and one or more coolant pathways are configured to circulate coolant of the internal combustion engine between the internal combustion engine and the heat exchanger. The heat exchanger is configured to heat the cargo compartment via thermal energy exchange between the coolant and a flow of air at the heat exchanger.

According to a second aspect of the invention, there is provided a cargo transportation system including a cargo compartment, and a heating system of the cargo compartment. The heating system includes an internal combustion engine, and an exhaust pathway operably connected to the internal combustion engine and structured to direct exhaust gas of the internal combustion engine away from the internal combustion engine. An air intake pathway is operably connected to the internal combustion engine and structured to direct an intake airflow into the internal combustion engine. The air intake pathway is at least partially surrounding the exhaust pathway along at least a portion of a length of the air intake pathway thereby heating the intake airflow via thermal energy exchange with the exhaust gas while also preventing mixing of the intake air and the exhaust gas streams. A heat exchanger is operably connected to the internal combustion engine, and one or more coolant pathways are configured to circulate coolant of the internal combustion engine between the internal combustion engine and the heat exchanger. The heat exchanger is configured to heat the cargo compartment via thermal energy exchange between the coolant and a flow of air at the heat exchanger.

Optionally, the heat exchanger is positioned in the cargo compartment.

Optionally, the air intake pathway of the internal combustion engine includes an intake sleeve at least partially surrounding the exhaust pathway.

Optionally, the air intake pathway at least partially surrounds a muffler of the exhaust pathway.

Optionally, an exhaust opening of the exhaust gas pathway is offset and spaced apart from an intake opening of the air intake pathway.

Optionally, the internal combustion engine is positioned in a housing and the exhaust pathway extends through an exhaust opening in the housing. The air intake pathway at least partially surrounds the exhaust pathway at the exhaust opening.

Optionally, a seal is positioned at the exhaust opening.

According to a third aspect of the invention, there is provided a method of operating a cargo transportation system includes operating an internal combustion engine, and heating a cargo compartment via a thermal energy exchange between a flow of coolant from the internal combustion engine and an airflow of the cargo compartment. A flow of exhaust gas is exhausted from the internal combustion engine via an exhaust pathway, and an intake airflow is directed into the internal combustion engine via an air intake pathway. The intake airflow is heated via thermal energy exchange with the exhaust gas, and mixing of the intake air and the exhaust gas streams is prevented. The air intake pathway surrounds the exhaust pathway along at least a portion of a length of the air intake pathway thereby heating the intake airflow via thermal energy exchange with the exhaust gas.

Optionally, the intake airflow is directed through an intake sleeve of the air intake pathway at least partially surrounding the exhaust pathway.

Optionally, the air intake pathway at least partially surrounds a muffler of the exhaust pathway.

Optionally, an exhaust opening of the exhaust gas pathway is offset and spaced apart from an intake opening of the air intake pathway.

Optionally, the internal combustion engine is positioned in a housing and the exhaust pathway extends through an exhaust opening in the housing. The air intake pathway at least partially surrounds the exhaust pathway at the exhaust opening.

Optionally, a seal is positioned at the exhaust opening.

### BRIEF DESCRIPTION OF THE DRAWINGS

Certain exemplary embodiments will now be described in greater detail (like elements being numbered alike) by way of example only and with reference to the accompanying drawings in which:
FIG. 1 is a schematic illustration of a cargo transportation system;
FIG. 2 is a schematic illustration of a heating system of a cargo transportation system; and
FIG. 3 is a schematic illustration of an arrangement of an air intake pathway and an exhaust pathway of a cargo transportation system.

### DETAILED DESCRIPTION

A detailed description of one or more embodiments of the disclosed apparatus and method are presented herein by way of exemplification and not limitation with reference to the Figures.

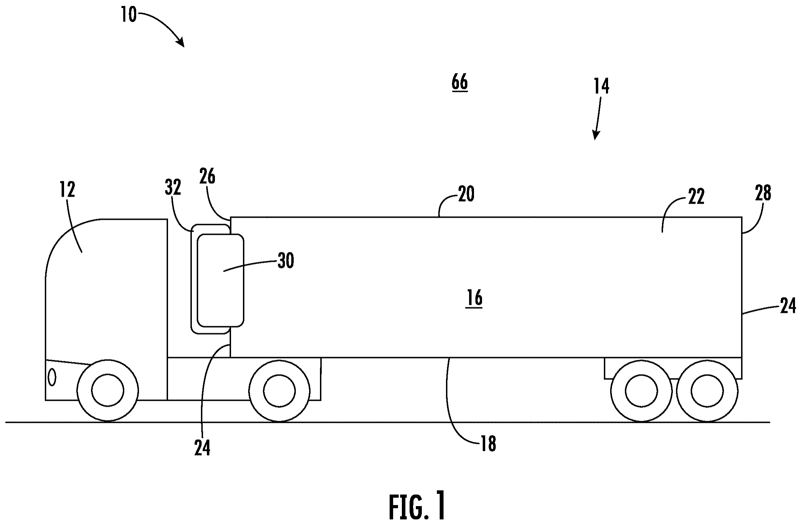

Illustrated in FIG. 1 is an embodiment of a cargo transportation system 10 in an ambient air space 66. The cargo transportation system 10 of the embodiment of FIG. 1 includes a truck 12 and a trailer 14 coupled to the truck 12, with a cargo compartment 16 defined in the trailer 14. The trailer 14 includes a trailer floor 18 and a trailer roof 20 offset from the trailer floor 18, with trailer sidewalls 22 extending between the trailer floor 18 and the trailer roof 20 along a length of the trailer 14. Trailer end walls 24 extending between the trailer floor 18 and the trailer roof 20 define a first trailer end 26 nearest to the truck 12, and a second trailer end 28 opposite the first trailer end 26. The cargo compartment 16 is, in some embodiments, at least partially defined by the trailer floor 18, the trailer roof 20, the trailer sidewalls 22 and the trailer end walls 24.

The trailer 14 includes a heating system 30 to provide heating to the cargo compartment 16. The heating system 30 is at least partially positioned in a housing 32, which may be located at, for example, the first trailer end 26.

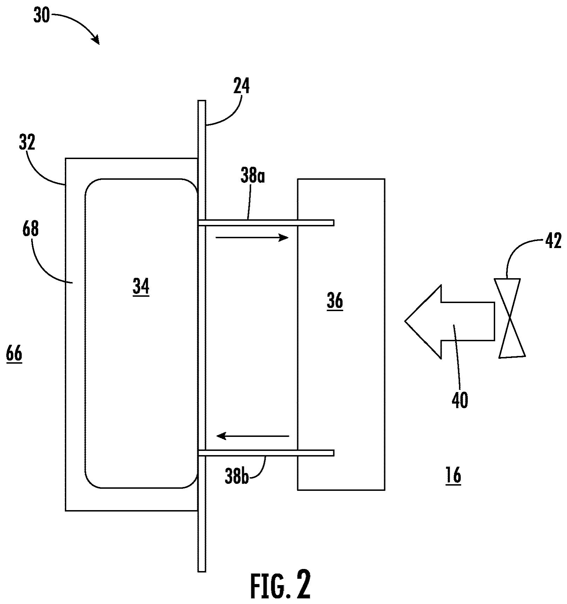

Referring now to FIG. 2, an embodiment of a heating system 30 is illustrated. The heating system 30 includes an internal combustion engine 34 disposed in the housing 32. Housing 32 at least partially controls the temperature and airflow of air space 68 around internal combustion engine 34. A heat exchanger 36, which in some embodiments is positioned in the cargo compartment 16, is operably connected to the internal combustion engine 34 via one or more coolant pathways 38. In some embodiments, the coolant pathways 38 extend from the internal combustion engine 34, through the trailer end wall 24 and to the heat exchanger 36. A first coolant pathway 38a directs coolant from the internal combustion engine 34 to the heat exchanger 36 where the coolant exchanges thermal energy with an airflow 40 inside the cargo compartment 16 to heat the airflow 40 and thus heat the cargo in compartment 16. A second coolant pathway 38b directs the coolant from the heat exchanger 36 back to the internal combustion engine 34. In some embodiments, a fan 42 is utilized to direct the airflow 40 through the heat exchanger 36. In some embodiments, the heat exchanger 36 is a tube and fin heat exchanger 36 configuration, where the airflow 40 is directed across a plurality of fins to enhance the thermal energy exchanger. While a tube and fin heat exchanger 36 is described herein, one skilled in the art will readily appreciate that other configurations of heat exchangers 36 may be utilized to transfer thermal energy from the coolant of the internal combustion engine 34 to the airflow 40 to heat the cargo compartment 16.

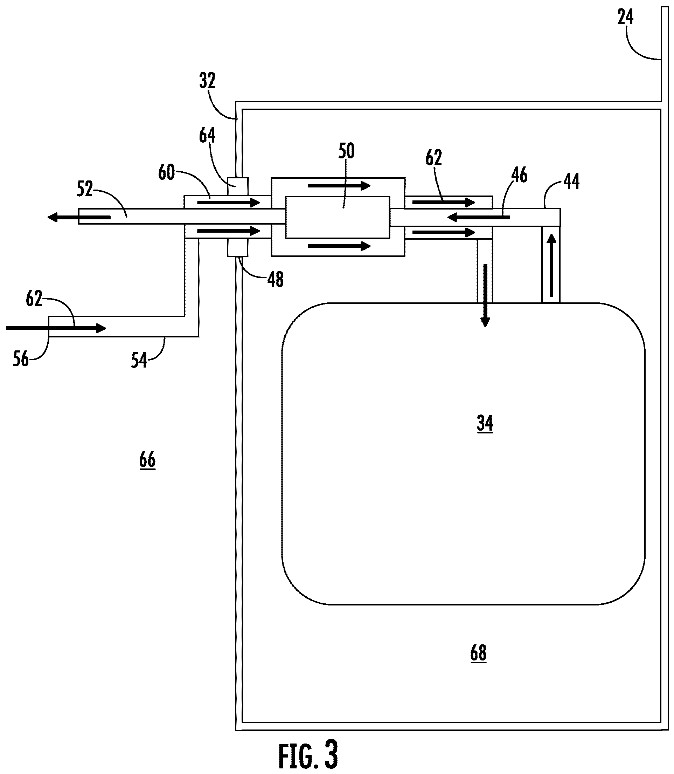

Referring now to FIG. 3, an exhaust pathway 44 extends from the internal combustion engine 34 to direct exhaust gases 46 from the internal combustion engine 34 though air space 68 and further through an exhaust opening 48 in the housing 32. The exhaust pathway 44 may, in some embodiments, include a muffler 50 and a tailpipe 52 with the tailpipe 52 extending through the exhaust opening 48. An air intake pathway 54 is connected to the internal combustion engine 34 to provide an intake airflow from ambient air space 66 to the internal combustion engine 34. The air intake pathway 54 includes an intake opening 56 offset and spaced apart from the tailpipe 52 and separating exhaust gases 46 and intake airflow 62. Downstream of the intake opening 56 the air intake pathway 54 includes an intake sleeve 60 that extends around the exhaust pathway 44, enclosing the exhaust pathway 44 along at least a portion of its length between the exhaust opening 48 and the internal combustion engine 34. As shown, the intake sleeve 60 is spaced apart from the exhaust pathway 44 to allow for the flow of intake airflow 62 along the air intake pathway 54 through the intake sleeve 60, past the portion of the exhaust pathway 44 enclosed by the intake sleeve 60. In some embodiments the intake sleeve 60 encloses the muffler 50 and at least a portion of the tailpipe 52, and further in some embodiments the intake sleeve 60 extends through the exhaust opening 48 in the housing 32, surrounding the tailpipe 52. In some embodiments, a housing seal 64 is installed between the intake sleeve 60 and a housing wall 64 of the housing 32 to seal the exhaust opening 48 thereby controlling the intake airflow 62 entering air space 68 through the housing 32 via the exhaust opening 48.

The combination of the exhaust pathway 44 with the intake sleeve 60 surrounding at least a portion of the exhaust pathway 44 acts as a heat exchanger, in which the exhaust gases 46 flowing along the exhaust pathway 44 exchange thermal energy with the intake airflow 62 passing through the intake sleeve 60 thereby heating the intake airflow 62, and decreasing the temperature of the exhaust gasses 46. This heating of the intake airflow 62 increases the internal temperature of the internal combustion engine 34 and thereby improves the energy efficiency of the heating system 30 and the heating capacity of the heating system 30.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the present invention as set out in the appended claims. In addition, many modifications may be made to adapt a particular situation or material to the teachings of the present invention without departing from the essential scope thereof as defined by the appended claims. Therefore, it is intended that the present invention not be limited to the particular embodiment disclosed as the best mode contemplated for carrying out this present invention, but that the present invention will include all embodiments falling within the scope of the claims.
The following clauses set out features of the invention which may or may not presently be claimed in this application, but which may form the basis for future amendment or a divisional application.
1. A heating system of a cargo compartment, comprising: an internal combustion engine; an exhaust pathway operably connected to the internal combustion engine and structured to direct exhaust gas of the internal combustion engine away from the internal combustion engine; and an air intake pathway operably connected to the internal combustion engine and structured to direct an intake airflow into the internal combustion engine, the air intake pathway at least partially surrounding the exhaust pathway along at least a portion of a length of the air intake pathway thereby heating the intake airflow via thermal energy exchange with the exhaust gas while also preventing mixing of the intake air and the exhaust gas streams.
2. The heating system of clause 1, wherein the air intake pathway includes an intake sleeve at least partially surrounding the exhaust pathway.
3. The heating system of clause 1, wherein the air intake pathway at least partially surrounds a muffler of the exhaust pathway.
4. The heating system of clause 1, wherein an exhaust opening of the exhaust gas pathway is offset and spaced apart from an intake opening of the air intake pathway.
5. The heating system of clause 1, wherein the internal combustion engine is disposed in a housing, the exhaust pathway extending through an exhaust opening in the housing, the air intake pathway surrounding the exhaust pathway at the exhaust opening.
6. The heating system of clause 5, further comprising a seal disposed at the exhaust opening.
7. The heating system of clause 1, further comprising: a heat exchanger operably connected to the internal combustion engine; and one or more coolant pathways configured to circulate coolant of the internal combustion engine between the internal combustion engine and the heat exchanger; wherein the heat exchanger is configured to heat the cargo compartment via thermal energy exchange between the coolant and a flow of air at the heat exchanger.
8. A cargo transportation system, comprising: a cargo compartment; and a heating system of the cargo compartment, including: an internal combustion engine; an exhaust pathway operably connected to the internal combustion engine and structured to direct exhaust gas of the internal combustion engine away from the internal combustion engine; an air intake pathway operably connected to the internal combustion engine and structured to direct an intake airflow into the internal combustion engine, the air intake pathway at least partially surrounding the exhaust pathway along at least a portion of a length of the air intake pathway thereby heating the intake airflow via thermal energy exchange with the exhaust gas while also preventing mixing of the intake air and the exhaust gas streams; a heat exchanger operably connected to the internal combustion engine; and one or more coolant pathways configured to circulate coolant of the internal combustion engine between the internal combustion engine and the heat exchanger; wherein the heat exchanger is configured to heat the cargo compartment via thermal energy exchange between the coolant and a flow of air at the heat exchanger.
9. The cargo transportation system of clause 8, wherein the heat exchanger is disposed in the cargo compartment.
10. The cargo transportation system of clause 8, wherein the air intake pathway of the internal combustion engine includes an intake sleeve at least partially surrounding the exhaust pathway.
11. The cargo transportation system of clause 8, wherein the air intake pathway at least partially surrounds a muffler of the exhaust pathway.
12. The cargo transportation system of clause 8, wherein an exhaust opening of the exhaust gas pathway is offset and spaced apart from an intake opening of the air intake pathway.
13. The cargo transportation system of clause 8, wherein the internal combustion engine is disposed in a housing, the exhaust pathway extending through an exhaust opening in the housing, the air intake pathway at least partially surrounding the exhaust pathway at the exhaust opening.
14. The cargo transportation system of clause 8, further comprising a seal disposed at the exhaust opening.
15. A method of operating a cargo transportation system, comprising: operating an internal combustion engine; heating a cargo compartment via a thermal energy exchange between a flow of coolant from the internal combustion engine and an airflow of the cargo compartment; exhausting a flow of exhaust gas from the internal combustion engine via an exhaust pathway; intaking an intake airflow into the internal combustion engine via an air intake pathway; heating the intake airflow via thermal energy exchange with the exhaust gas; preventing mixing of the intake air and the exhaust gas streams; wherein the air intake pathway surrounds the exhaust pathway along at least a portion of a length of the air intake pathway thereby heating the intake airflow via thermal energy exchange with the exhaust gas.
16. The method of clause 15, wherein the intake airflow is directed through an intake sleeve of the air intake pathway at least partially surrounding the exhaust pathway.
17. The method of clause 15, wherein the air intake pathway at least partially surrounds a muffler of the exhaust pathway.
18. The method of clause 15, wherein an exhaust opening of the exhaust gas pathway is offset and spaced apart from an intake opening of the air intake pathway.
19. The method of clause 15, wherein the internal combustion engine is disposed in a housing, the exhaust pathway extending through an exhaust opening in the housing, the air intake pathway at least partially surrounding the exhaust pathway at the exhaust opening.
20. The method of clause 15, further comprising a seal disposed at the exhaust opening.

## Claims

1. A heating system (30) of a cargo compartment (16), comprising:
an internal combustion engine (34);
an exhaust pathway (44) operably connected to the internal combustion engine and structured to direct exhaust gas of the internal combustion engine away from the internal combustion engine; and
an air intake pathway (54) operably connected to the internal combustion engine and structured to direct an intake airflow into the internal combustion engine, the air intake pathway at least partially surrounding the exhaust pathway along at least a portion of a length of the air intake pathway thereby heating the intake airflow via thermal energy exchange with the exhaust gas while also preventing mixing of the intake air and the exhaust gas streams.

2. The heating system (30) of claim 1, wherein the air intake pathway (54) includes an intake sleeve (60) at least partially surrounding the exhaust pathway (44).

3. The heating system (30) of claim 1 or 2, wherein the air intake pathway (54) at least partially surrounds a muffler (50) of the exhaust pathway (44).

4. The heating system (30) of claim 1, 2 or 3, wherein an exhaust opening (48) of the exhaust gas pathway (44) is offset and spaced apart from an intake opening (56) of the air intake pathway (54).

5. The heating system (30) of any preceding claim, wherein the internal combustion engine (34) is disposed in a housing (32), the exhaust pathway (44) extending through an exhaust opening (48) in the housing, the air intake pathway (54) surrounding the exhaust pathway at the exhaust opening.

6. The heating system (30) of claim 5, further comprising a seal (64) disposed at the exhaust opening (48).

7. The heating system (30) of any preceding claim, further comprising:
a heat exchanger (36) operably connected to the internal combustion engine (34); and
one or more coolant pathways (38) configured to circulate coolant of the internal combustion engine between the internal combustion engine and the heat exchanger;
wherein the heat exchanger is configured to heat the cargo compartment (16) via thermal energy exchange between the coolant and a flow of air at the heat exchanger.

8. A cargo transportation system (10), comprising:
a cargo compartment (16); and
a heating system (30) of the cargo compartment according to claim 7.

9. The cargo transportation system (10) of claim 8, wherein the heat exchanger (36) is disposed in the cargo compartment (16).

10. A method of operating a cargo transportation system (10), comprising:
operating an internal combustion engine (34);
heating a cargo compartment (16) via a thermal energy exchange between a flow of coolant from the internal combustion engine and an airflow of the cargo compartment;
exhausting a flow of exhaust gas from the internal combustion engine via an exhaust pathway (44);
intaking an intake airflow into the internal combustion engine via an air intake pathway (54);
heating the intake airflow via thermal energy exchange with the exhaust gas;
preventing mixing of the intake air and the exhaust gas streams;
wherein the air intake pathway surrounds the exhaust pathway along at least a portion of a length of the air intake pathway thereby heating the intake airflow via thermal energy exchange with the exhaust gas.

11. The method of claim 10, wherein the intake airflow is directed through an intake sleeve (60) of the air intake pathway at least partially surrounding the exhaust pathway (44).

12. The method of claim 10 or 11, wherein the air intake pathway (54) at least partially surrounds a muffler (50) of the exhaust pathway (44).

13. The method of claims 10, 11 or 12, wherein an exhaust opening (48) of the exhaust gas pathway (44) is offset and spaced apart from an intake opening (56) of the air intake pathway (54).

14. The method of claim 10, wherein the internal combustion engine (34) is disposed in a housing (32), the exhaust pathway (44) extending through an exhaust opening (48) in the housing, the air intake pathway (54) at least partially surrounding the exhaust pathway at the exhaust opening.

15. The method of claim 10, further comprising a seal (64) disposed at the exhaust opening (48).
